# EUROPÄISCHE PATENTSCHRIFT

(11) **EP 4 022 750 B1**
(45) Veröffentlichungstag und Bekanntmachung des Hinweises auf die Patenterteilung: **11.09.2024**
(21) Anmeldenummer: 20756763.7
(22) Anmeldetag: 31.07.2020
(51) Int. Cl.: H02K 15/16, H02K 15/03, H02K 1/276, H02K 7/04, C21D 7/00, B23P 9/00

(54) **VERFAHREN ZUM VERFESTIGEN EINER BRÜCKENANORDNUNG EINES ROTATIONSKÖRPERS**
METHOD FOR CONSOLIDATING A BRIDGE STRUCTURE OF A ROTATING BODY
MÉTHODE DE CONSOLIDATION D'UNE STRUCTURE DE PONT D'UN CORPS ROTATIF

(30) Priorität: 30.08.2019 DE 102019123259
(43) Veröffentlichungstag der Anmeldung: 06.07.2022
(73) Patentinhaber: Schaeffler Technologies AG & Co. KG, 91074 Herzogenaurach (DE)
(72) Erfinder: BÖHLER, Felix, 5200 Brugg AG (CH); KECK, Holger, 77866 Rheinau (DE); BLAES, Cédric, 67470 Munchhausen (FR)
(86) Internationale Anmeldenummer: PCT/DE2020/100683
(87) Internationale Veröffentlichungsnummer: WO 2021/037304

(56) Entgegenhaltungen:
- EP-A1- 3 048 702
- EP-A1- 3 179 611
- JP-A- 2000 060 087
- US-A- 3 797 106
- US-A- 5 158 435
- US-A1- 2010 212 422
- US-A1- 2018 254 675
- US-B1- 6 580 186

## Beschreibung

Die vorliegende Erfindung betrifft ein Verfahren zum Verfestigen einer Brückenanordnung eines Rotationskörpers mit einer Rotationsachse für einen elektrischen Antrieb.

Auch betrifft die vorliegende Erfindung einen Rotationskörper, hergestellt durch die Schritte des Verfahrens.

Insbesondere mit der zunehmenden Elektrifizierung von Fahrzeugen wird es wichtiger, die elektrischen Antriebssysteme stetig zu verbessern. Dies bedeutet auch, deren Wirkungsgrad beispielsweise über Gewichtsersparnisse zu erhöhen. Weiterhin ist es wichtig, den erforderlichen Bauraum ohne Leistungseinbußen zu reduzieren.

Es ist zu erwarten, dass elektrifizierte Fahrzeuge in den nächsten Jahren hohe Stückzahlen erreichen werden und dass der mechatronische Integrationsgrad deutlich steigt. Dabei werden sehr unterschiedliche Topologien für den Antriebsstrang realisiert, die anhand der Einbauposition klassifiziert werden können. Für die konstruktive Umsetzung dieser Antriebsstränge sind insbesondere vier Aggregate-Klassen relevant, nämlich Hybridmodule für die Integration in den verbrennungsmotorischen Antriebsstrang, dedizierte Hybridgetriebe für die gezielte Realisierung hybridischer und elektrischer Fahrmodi, elektrische Achsantriebe für dedizierte Hybrid-Antriebsstränge und reine Elektrofahrzeuge und Radnabenantriebe für neue Mobilitätskonzepte. Grundsätzlich ist dabei die Verwendung von elektrischen Maschinen vorgesehen, die insbesondere einen rotorblechbasierten Rotor aufweisen.

Gemeinsam ist allen zukünftigen Aggregate-Konzepten, dass sie einen hohen Integrationsgrad von Mechanik und Elektrik/Elektronik aufweisen. Allerdings unterscheiden sich die Anforderungen an die elektrischen Maschinen. So ist der axiale Bauraum sowohl bei Hybridmodulen als auch bei Radnabenmotoren begrenzt. Zudem besteht eine direkte Kopplung der Drehzahl an den Triebstrang, sodass eine Leistungsskalierung insbesondere über das Drehmoment der elektrischen Maschine erfolgt. Bei elektrischen Achsantrieben steht mehr axialer Bauraum zur Verfügung, hingegen ist aufgrund der Einbauposition der Durchmesser in der Regel begrenzt. Die Kopplung an die Achse erfolgt bevorzugt über mindestens eine Getriebestufe, um ein benötigtes Anfahrmoment sicherzustellen. Das ermöglicht es, die Leistung der elektrischen Maschinen über höhere Drehzahlen zu steigern, was wiederum kleinere, materialsparende Bauweisen ermöglicht. Analog gilt das für die meisten dedizierten Hybridgetriebe. Hingegen ist die Leistungselektronik weitgehend vom Aggregatetyp unabhängig, sie definiert sich im Wesentlichen über die Spannungslage, die Höhe des für die Maximalleistung benötigten Stroms und den für das Aggregat spezifischen Bauraum.

Die Druckschriften JP2000060087A, EP3048702A1, US2018254675A1, US3797106A offenbaren Rotoren elektrischer Maschinen.

Aus der EP3179611A1 sowie aus US6580186B1 sind Auswuchtverfahren zum Auswuchten von Rotoren elektrischer Maschinen bei bei hoher Drehzahl bekannt. Die US3797106A sowie die US5158435A offenbaren Verfahren spezifisch für Turbinenräder, bei denen entweder unbeabsichtigte Ausdehnungen durch dem Betrieb vorgelagerte Verfahrensschritte vermieden werden oder gezielt an integral ausgebildeten Aluminiumkörpern Dehnungen eingebracht werden, um entsprechende Verfestigungen zu erreichen.

Die Aufgabe der vorliegenden Erfindung ist es, ein Verfahren zum Verfestigen einer Brückenanordnung eines Rotationskörpers mit einer Rotationsachse für einen elektrischen Antrieb sowie einen entsprechend hergestellten Rotationskörper zu schaffen, die einen verbesserten Rotationskörper ermöglichen.

Die Lösung der Aufgabe erfolgt erfindungsgemäß durch ein Verfahren zum Verfestigen einer Brückenanordnung eines Rotationskörpers mit einer Rotationsachse für einen elektrischen Antrieb mit den Merkmalen des Anspruchs 1 und durch einen Rotationskörper mit den Merkmalen des Anspruchs 10. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist somit ein Verfahren zum Verfestigen einer Brückenanordnung eines Rotationskörpers mit einer Rotationsachse für einen elektrischen Antrieb angegeben, mindestens aufweisend Schritte zum Auswuchten und Rotationsverfestigen,
wobei das Auswuchten mindestens folgende Schritte aufweist:
ein Rotieren des Rotationskörpers um eine Rotationsachse mit einer Unwuchtbestimmungsdrehzahl, um eine Unwucht des Rotationskörpers zu detektieren,
ein Bestimmen der Unwucht des Rotationskörpers,
ein Befestigen oder Wegnehmen, bei einer Stillstanddrehzahl, mindestens eines Auswuchtgewichts am Rotationskörper, um die Unwucht auszugleichen,
wobei das Rotationsverfestigen mindestens folgenden Schritt aufweist:
   Rotieren des Rotationskörpers um die Rotationsachse mit einer Verfestigungsdrehzahl, wobei der Betrag Verfestigungsdrehzahl größer ist als der Betrag der Unwuchtbestimmungsdrehzahl.

Erfindungsgemäß ist weiter ist vorgesehen, dass der Betrag der Verfestigungsdrehzahl derart eingestellt ist, dass mindestens eine Brückenanordnung des Rotationskörpers nach dem Rotationsverfestigen ein plastisches Dehnungsmaß von mindestens einschließlich 0,2 Prozent bis einschließlich 1 Prozent, vorzugsweise 0,5 Prozent aufweist.

Das Verfahren umfasst somit zwei wesentliche Schritte, nämlich das Auswuchten und das Rotationsverfestigen. Die einzelnen Schritte des Auswuchtens können in Ihrer Reihenfolge mit den einzelnen Schritte des Rotationsverfestigens insbesondere kombiniert werden beziehungsweise abweichend erfolgen. Wesentlich ist, dass zu irgend einem Zeitpunkt jeder dieser Schritte an einem Rotationskörper durchgeführt wird, sodass dieser eine verfestigte Brückenanordnung aufweist.

Durch das Rotationsverfestigen können eine oder mehrere Brückenanordnungen für einen zuverlässigen Betrieb des Rotationskörpers in radialer Erstreckung eine geringere Materialstärke aufweisen als es ohne das Rotationsverfestigen der Fall wäre. Anders formuliert können eine oder mehrere Brückenanordnungen des Rotationskörpers radial dünner dimensioniert werden. Das Rotationsverfestigen erhöht die Festigkeit des Rotationskörpers im Bereich der einen oder mehreren Brückenanordnungen, sodass diese eine höhere Berstdrehzahl aufweisen und damit für eine höhere Betriebsdrehzahl geeignet sind.

Der Begriff Auswuchten bezeichnet das Verringern oder Beseitigen einer Unwucht. Jeder um eine feststehende Achse rotierende starre Körper besitzt eine Unwucht, die zu Vibrationen beziehungsweise Schwingungen, Geräuschen und erhöhtem Verschleiß, bei hohen Drehzahlen sogar zur Zerstörung führen kann.

Beim Auswuchten von Fahrzeugrädern versetzt eine Auswuchtmaschine einen Körper in Rotation. Die Achse, an der dies geschieht, ist insbesondere mit Sensoren ausgestattet. Eine Auswert-Elektronik errechnet aus den gemessenen Werten der an der Achse auftretenden Kräfte die Unwucht. Anschließend werden Auswuchtgewichte an der Felge befestigt, um die Unwucht auszugleichen. Bevorzugtes Ziel des Auswuchtens ist es einerseits, den Schwerpunkt des auszuwuchtenden Rades so einzustellen, dass er auf die Drehachse fällt, anderseits auch, dass sich die senkrecht zum Rotationskörper stehende Hauptträgheitsachse nicht nur mit der Rotationsachse schneidet, sondern auf ihr liegt. Daher können optional an beiden Seiten der Felge Ausgleichsgewichte angebracht werden.

Auswuchtmaschinen bestimmen anhand einer Drehbewegung und einer dynamischen Kraftmessung an der Drehachse die Masse, den Winkel und die Seite des Rotationskörpers, an der Auswuchtgewichte beziehungsweise Ausgleichsgewichte anzubringen sind.

Das Befestigen oder Wegnehmen eines Auswuchtgewichts am Rotationskörper ist letztlich ein Prozessschritt, der einer gemeinsamen technischen Überlegung unterliegt, bei dem die Masseverteilung derart angepasst wird, dass die Unwucht ausgeglichen wird. Zusammengefasst werden kann diese Terminologie konkret als Auswuchten.

Das Rotationsverfestigen erhöht die Festigkeit einer oder mehrerer Brückenanordnungen. Die Festigkeit eines Werkstoffes beschreibt die Beanspruchbarkeit durch mechanische Belastungen, bevor es zu einem Versagen kommt, und wird angegeben als mechanische Spannung, also als Kraft pro Querschnittsfläche. Werkstoffe mit hoher Festigkeit können mit höheren Spannungen beansprucht werden als Werkstoffe mit geringer Festigkeit. Das Versagen kann eine unzulässige Verformung sein, insbesondere eine plastische, also bleibende, Verformung oder auch ein Bruch. Bei Rotationskörpern im Sinne der Erfindung gilt als Punkt eines solchen Bruchs die Berstdrehzahl. Vorliegend erfolgt durch das Beaufschlagen des Rotationskörpers mit der Verfestigungsdrehzahl eine Erhöhung der Materialfestigkeit. Bevorzugt kann dies durch Versatz im jeweiligen Werkstoff erfolgen, der durch Fliehkrafteinwirkung entsteht.

Das Rotationsverfestigen erfolgt bevorzugt insofern nicht umgebungsspezifisch, als die Dauer der Beaufschlagung mit der Verfestigungsdrehzahl, die Umgebungstemperatur und/oder der Umgebungsdruck keine wesentlichen Einflüsse sind. Beispielhaft kann das Beaufschlagen des Rotationskörpers mit der Verfestigungsdrehzahl für eine Sekunde ausreichen, um den Rotationskörper zu verfestigen.

Als Stillstanddrehzahl ist im Sinne der Erfindung ein rotatorischer Stillstand zu verstehen. Anders formuliert ist der Betrag der Stillstanddrehzahl gleich null.

Das plastische Dehnungsmaß ist eine Angabe für die dauerhafte relative Längenänderung, also Verlängerung beziehungsweise Verkürzung, eines Körpers unter Belastung, beispielsweise durch eine Kraft oder durch eine Temperaturänderung, insbesondere Wärmeausdehnung. Wenn die Abmessung des Körpers sich vergrößert, spricht man von einer positiven Dehnung, eine sogenannte Streckung, andernfalls von einer negativen Dehnung, eine sogenannte Stauchung. Es hat sich herausgestellt, dass bei diesem Maß eine vorteilhafte Verfestigung des Rotationskörpers eintritt, der eine kompakte Dimensionierung der Brückenanordnung ermöglicht.

Erfindungsgemäß ist außerdem ein Rotationskörper angegeben, hergestellt durch die Schritte des Verfahrens.

Erfindungsgemäß ist vorgesehen, dass
der Rotationskörper ein Rotorblech, ein Rotorblechstapel, ein Rotor oder eine elektrische Maschine ist. Im Falle eines Rotorblechs, eines Rotorblechstapels oder eines Rotors handelt es sich selbst um rotierende Elemente. Im Falle einer elektrischen Maschine rotiert nicht die gesamte Maschine, sondern deren Rotor, sodass auch die elektrische Maschine nach Lehre der Erfindung als Rotationskörper gilt.

Ein Rotorblech ist auch bekannt als Elektroblech. Es ist ein bedeutender weichmagnetischer Werkstoffelement für Magnetkerne. Es wird nach seinen Eigenschaften in nicht-kornorientierte und kornorientierte Werkstoffe unterteilt, wobei erstere je nach Verwendungszweck auch Dynamoblech oder Motorenblech, letztere auch Transformatorenblech oder Kernblech genannt werden. Rotorblech und -band bezeichnet im engeren Sinn häufig kaltgewalztes Band aus Eisen-Silizium-Legierungen, darüber hinaus auch die daraus geschnittenen oder gestanzten Blechlamellen, die zur Herstellung von magnetischen Kreisen für elektrische Maschinen, also von Eisenkernen für Dynamos, Elektromotoren, Transformatoren, Relais, Schaltschützen, Drosselspulen, Zündspulen, Stromzähler und steuerbaren Ablenkmagneten verwendet werden.

Die magnetischen, physikalischen und sonstigen Anforderungen an den Werkstoff sind in den Normen "Kaltgewalztes nicht kornorientiertes Elektroblech und -band im schlussgeglühten Zustand" (EN 10106) und "Kornorientiertes Elektroblech und -band im schlussgeglühten Zustand" (EN 10107) beschrieben. Als geltender Zeitpunkt für die Normen gilt der früheste Zeitrang dieser Erfindung.

Rotorbleche als Eisenkerne aus Vollmaterial sind bei Maschinen und Transformatoren nur schwer nutzbar, denn unter dem Einfluss veränderlicher Magnetfelder entstehen Wirbelströme. Statt elektrische Leistung zu übertragen, wird der Kern durch Wirbelströme mit zunehmender Frequenz regelmäßig heiß. Um dies zu vermeiden, werden Eisenkerne für elektrische Maschinen vorzugsweise ausschließlich als lamellierte und isolierte Bleche in Paketen oder als gewickelte Schnittbandkerne ausgeführt. Eine entsprechende Ausführung wird auch als geblecht bezeichnet.

Weichmagnetische Materialien bilden unter dem Einfluss eines magnetischen Feldes einen Magneten und gehen nach dem Abschalten des Feldes großenteils wieder in den unmagnetischen Zustand über. Einfaches Dynamoblech kann magnetisch üblicherweise mit maximal 1,2 Tesla, entsprechend 12.000 Gauß, ausgenutzt werden. Weiterentwickelte Eisen-Silizium-Legierungen ermöglichen Flussdichten bis etwa 1,75 Tesla.

Rotorbleche beziehungsweise Standardkerne werden bevorzugt aus gestanzten Einzelblechen hergestellt.

Sofern mehrere Rotorbleche übereinander angeordnet werden, ist diese Anordnung als Rotorblechstapel bekannt.

Rotorbleche können durch einseitig aufgeklebte Papierschichten isoliert werden. Vorzugsweise können die Rotorbleche durch chemisch aufgebrachte Phosphatierungsschichten isoliert werden. Die Blechstärke für normale Anwendungen beträgt vorzugsweise 0,5 mm. Für elektrische Übertrager von höheren Frequenzen oder besonders verlustarme Geräte können dünnere Bleche mit 0,35 mm Stärke verwendet werden. Schnittband- und Ringkerne werden oft aus noch dünneren und ebenfalls isolierten Bändern gewickelt.

Ein Rotor ist ein rotierender, also sich drehender, Teil einer elektrischen Maschine oder eines Aggregates. Insbesondere wird von einem Rotor gesprochen, wenn es auch einen Stator gibt. Bei rotierenden elektrischen Maschinen wird der gesamte rotierende Teil der Maschine als Rotor oder alternativ als Läufer, wie dem Kurzschlussläufer, bezeichnet.

Eine elektrische Maschine ist eine in der elektrischen Energietechnik eingesetzte Maschine und stellt eine Form von Energiewandler dar. Es wird unterschieden zwischen rotierenden elektrischen Maschinen, dazu zählen verschiedene Typen von Elektromotoren und elektrischen Generatoren, und ruhenden elektrischen Maschinen, zu denen Transformatoren gehören. Allen elektrischen Maschinen gemeinsam ist, dass sie in ihrem Aufbau über einen magnetischen Kreis verfügen, der für die Funktion wesentlich ist. Im Sinne der Erfindung gilt eine rotierende elektrische Maschine als Rotationskörper.

Erfindungsgemäß ist vorgesehen, dass
mindestens eine Brückenanordnung am äußeren Umfang mindestens eines Rotorblechs angeordnet ist. Derartige Brückenanordnungen sind an dieser Position insbesondere zur effizienten Funktionsweise elektrischer Maschinen vorgesehen.

Gemäß einer bevorzugten Ausführungsform der Erfindung ist vorgesehen, dass der Betrag der Verfestigungsdrehzahl zwischen dem Betrag einer Betriebsdrehzahl des Rotationskörpers und einem Betrag mindestens einschließlich kleiner 10 Prozent, vorzugsweise mindestens einschließlich kleiner 20 Prozent, einer Berstdrehzahl des Rotationskörpers beträgt. Es hat sich herausgestellt, dass bei einer solchen Einstellung der Verfestigungsdrehzahl eine vorteilhafte Verfestigung des Rotationskörpers eintritt, der eine kompakte Dimensionierung der Brückenanordnung ermöglicht.

Gemäß einer bevorzugten Ausführungsform der Erfindung ist vorgesehen ein Erneutes Rotieren des Rotationskörpers um die Rotationsachse mit der Unwuchtbestimmungsdrehzahl, nach dem Befestigen oder Wegnehmen des mindestens einen Auswuchtgewichts am Rotationskörper, um ein Vorhandensein einer Unwucht des Rotationskörpers zu detektieren, und vorzugsweise ein bedarfsweises Wiederholen des Auswuchtens. Hierbei handelt es sich um eine qualitätssichernde Maßnahme, um einen zuverlässig ausgewuchteten Rotationskörper zu erzeugen. Insbesondere wegen der zusätzlichen Belastung des Rotationsverfestigens kann dies eine sinnvolle Maßnahme zur Qualitätssicherung sein.

Gemäß einer bevorzugten Ausführungsform der Erfindung ist folgende Reihenfolge der Schritte vorgesehen, nämlich
Eingangs das Rotieren des Rotationskörpers um die Rotationsachse mit der Verfestigungsdrehzahl, wobei der Betrag Verfestigungsdrehzahl größer ist als der Betrag der Unwuchtbestimmungsdrehzahl,
anschließend das Rotieren des Rotationskörpers um seine Rotationsachse mit der Unwuchtbestimmungsdrehzahl, um die Unwucht des Rotationskörpers zu detektieren, wobei optional zwischen dem Rotieren des Rotationskörpers um die Rotationsachse mit der Verfestigungsdrehzahl und dem Rotieren des Rotationskörpers um seine Rotationsachse mit der Unwuchtbestimmungsdrehzahl, der Rotationskörper mit der Stillstanddrehzahl stillsteht,
anschließend das Bestimmen der Unwucht des Rotationskörpers,
anschließend das Befestigen oder Wegnehmen, bei der Stillstanddrehzahl, mindestens eines Auswuchtgewichts am Rotationskörper, um die Unwucht auszugleichen,
vorzugsweise anschließend ein erneutes Rotieren des Rotationskörpers um die Rotationsachse mit der Unwuchtbestimmungsdrehzahl, nach dem Befestigen oder Wegnehmen des mindestens einen Auswuchtgewichts am Rotationskörper, um ein Vorhandensein einer Unwucht des Rotationskörpers zu detektieren, und vorzugsweise ein bedarfsweises Wiederholen des Auswuchtens. Ein besonderer Vorteil des erneuten Rotierens des Rotationskörpers liegt darin, dass etwaige Unruhen durch das Rotationsverfestigen ausgeglichen werden können. Sofern der Rotationskörper mit der Stillstanddrehzahl nicht stillsteht zwischen dem Rotieren des Rotationskörpers um die Rotationsachse mit der Verfestigungsdrehzahl und dem Rotieren des Rotationskörpers um seine Rotationsachse mit der Unwuchtbestimmungsdrehzahl, kann das Auswuchten des Rotationskörpers unmittelbar nach seinem Rotationsverfestigen erfolgen, sodass der Rotationskörper nicht stillsteht und vorhandene kinetische Drehenergie nicht dissipiert, sodass hierdurch Energie eingespart werden kann. Sofern der Rotationskörper mit der Stillstanddrehzahl stillsteht zwischen dem Rotieren des Rotationskörpers um die Rotationsachse mit der Verfestigungsdrehzahl und dem Rotieren des Rotationskörpers um seine Rotationsachse mit der Unwuchtbestimmungsdrehzahl, wird der Rotationskörper nach dem Rotationsverfestigen aus seiner Drehungbewegung gestoppt, also auf die Stillstanddrehzahl, die grundsätzlich stets null entspricht, heruntergefahren. Danach kann der Rotationskörper beispielsweise auf Fehlerfreiheit geprüft werden. Zu einem beliebigen späteren Zeitpunkt kann das Auswuchten des Rotationskörpers erfolgen.

Somit kann beispielsweise verhindert werden, dass ein defekter Rotationskörper um seine Rotationsachse mit einer Unwuchtbestimmungsdrehzahl gedreht wird, sodass hierdurch die Verarbeitung defekter Bauteile vermieden wird.

Gemäß einer bevorzugten Ausführungsform der Erfindung ist folgende Reihenfolge der Schritte vorgesehen, nämlich
Eingangs das Rotieren des Rotationskörpers um seine Rotationsachse mit der Unwuchtbestimmungsdrehzahl, um die Unwucht des Rotationskörpers zu detektieren, anschließend das Bestimmen der Unwucht des Rotationskörpers,
anschließend das Befestigen oder Wegnehmen, bei der Stillstanddrehzahl, mindestens eines Auswuchtgewichts am Rotationskörper, um die Unwucht auszugleichen,
anschließend das Rotieren des Rotationskörpers um die Rotationsachse mit der Verfestigungsdrehzahl, wobei der Betrag Verfestigungsdrehzahl größer ist als der Betrag der Unwuchtbestimmungsdrehzahl,
vorzugsweise anschließend ein erneutes Rotieren des Rotationskörpers um die Rotationsachse mit der Unwuchtbestimmungsdrehzahl, nach dem Befestigen oder Wegnehmen des mindestens einen Auswuchtgewichts am Rotationskörper, um ein Vorhandensein einer Unwucht des Rotationskörpers zu detektieren, und vorzugsweise ein bedarfsweises Wiederholen des Auswuchtens. Ein besonderer Vorteil des erneuten Rotierens des Rotationskörpers liegt darin, dass etwaige Unruhen durch das Rotationsverfestigen ausgeglichen werden können. Weiterhin kann das erneute Rotieren des Rotationskörpers um die Rotationsachse mit der Unwuchtbestimmungsdrehzahl unmittelbar nach seinem Rotationsverfestigen erfolgen, sodass der Rotationskörper nicht stillsteht und vorhandene kinetische Drehenergie nicht dissipiert, sodass hierdurch Energie eingespart werden kann.

Gemäß einer bevorzugten Ausführungsform der Erfindung ist folgende Reihenfolge der Schritte vorgesehen, nämlich
Eingangs das Rotieren des Rotationskörpers um seine Rotationsachse mit der Unwuchtbestimmungsdrehzahl, um die Unwucht des Rotationskörpers zu detektieren, anschließend das Bestimmen der Unwucht des Rotationskörpers, anschließend das Befestigen oder Wegnehmen, bei der Stillstanddrehzahl, mindestens eines Auswuchtgewichts am Rotationskörper, um die Unwucht auszugleichen,
vorzugsweise anschließend ein erneutes Rotieren des Rotationskörpers um die Rotationsachse mit der Unwuchtbestimmungsdrehzahl, nach dem Befestigen oder Wegnehmen des mindestens einen Auswuchtgewichts am Rotationskörper, um ein Vorhandensein einer Unwucht des Rotationskörpers zu detektieren, und vorzugsweise ein bedarfsweises Wiederholen des Auswuchtens,
anschließend das Rotieren des Rotationskörpers um die Rotationsachse mit der Verfestigungsdrehzahl, vorzugsweise im Rahmen der abschließenden Montage des Rotationskörpers, wobei der Betrag Verfestigungsdrehzahl größer ist als der Betrag der Unwuchtbestimmungsdrehzahl. Ein besonderer Vorteil des erneuten Rotierens des Rotationskörpers liegt darin, dass etwaige Unruhen durch das Rotationsverfestigen ausgeglichen werden können. Ein besonderer Vorteil liegt gemäß dieser Ausführungsform darin, dass das Rotationsverfestigen als letzter Verfahrensschritt auch bei einem anderen Herstellungsprozess erfolgen kann, beispielsweise im Rahmen einer finalen Montage beim Fahrzeughersteller. Somit kann dieser das Rotationsverfestigen nach seinen Anforderungen vornehmen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine ausschnittsweise Darstellung eines Rotationskörpers mit mindestens einer Brückenanordnung, insbesondere verfestigt nach einer bevorzugten Maßnahme der Erfindung,
- Fig. 2:: einen Ausschnitt der mindestens einen Brückenanordnung nach Fig. 1, jedoch ohne ein erfolgtes Rotationsverfestigen,
- Fig. 3:: einen Ausschnitt der mindestens einen Brückenanordnung nach Fig. 1, jedoch mit einem erfolgten Rotationsverfestigen,
- Fig. 4:: ein Diagramm über die erhöhte Lebensdauer des Rotationskörpers nach Fig. 3,
- Fig. 5:: ein Diagramm über ein bevorzugtes Herstellungsverfahren des Rotationskörpers nach Fig. 3,
- Fig. 6:: ein Diagramm über ein alternatives bevorzugtes Herstellungsverfahren des Rotationskörpers nach Fig. 3,
- Fig. 7:: ein Diagramm über ein alternatives bevorzugtes Herstellungsverfahren des Rotationskörpers nach Fig. 3, und
- Fig. 8:: ein Diagramm über ein alternatives bevorzugtes Herstellungsverfahren des Rotationskörpers nach Fig. 3.

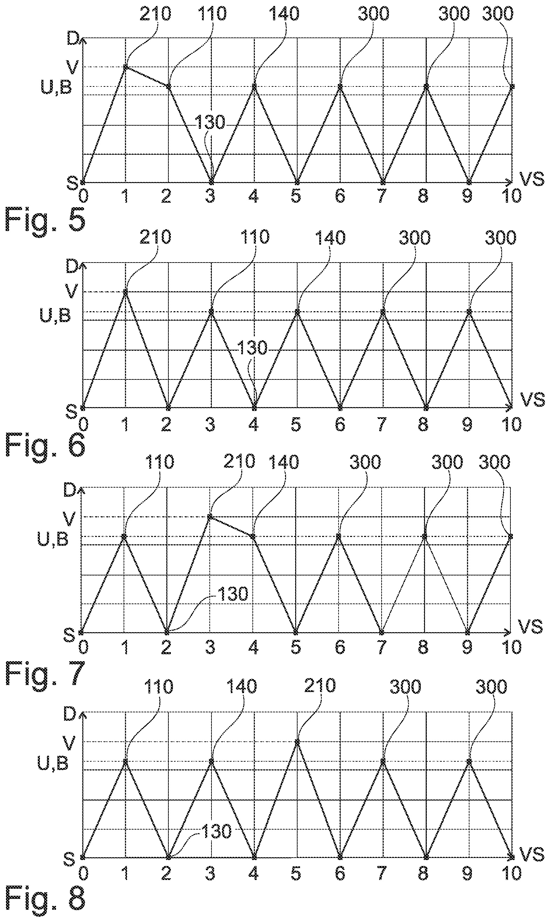

Die Figuren 5 bis 8 zeigen jeweils bevorzugte Maßnahmen eines Verfahrens zum Verfestigen einer Brückenanordnung 10 eines Rotationskörpers 12 mit einer Rotationsachse R für einen elektrischen Antrieb.

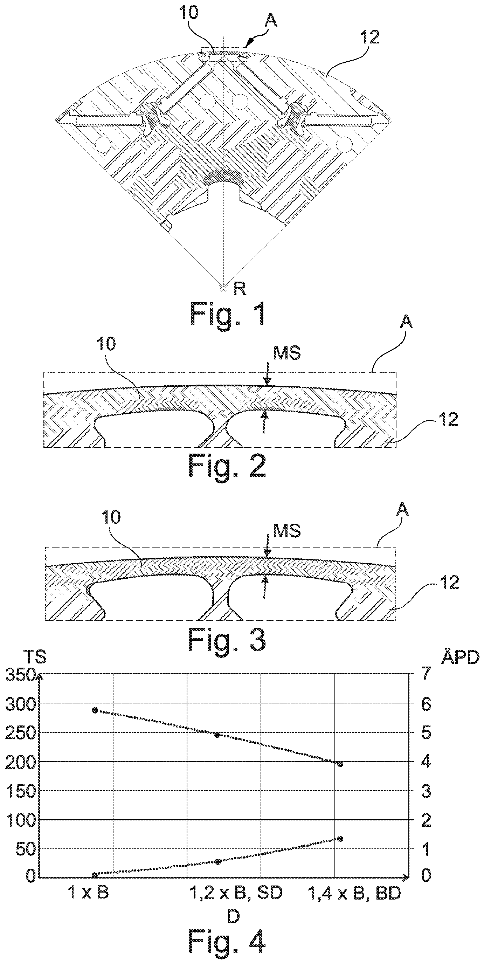

Die Figur 1 zeigt einen Teil eines Rotorblechs als Rotationskörper 12, hergestellt durch die Schritte des Verfahrens. Dabei umfasst Figur 1 einen Ausschnitt A einer Brückenanordnung 10 eines als Rotorblech ausgebildeten Rotationskörpers 12.

Figur 2 zeigt einen vergrößerten Ausschnitt einer Brückenanordnung 10 eines als Rotorblech ausgebildeten Rotationskörpers 12, analog zum Ausschnitt A der Figur 1. Allerdings ist dieses Rotorblech nach Stand der Technik hergestellt.

Figur 3 zeigt die Brückenanordnung 10 des als Rotorblech ausgebildeten Rotationskörpers 12, als Ausschnitt A der Figur 1. Die Brückenanordnung 10 des als Rotorblech ausgebildeten Rotationskörpers 12 wurde somit rotationsverfestigt.

Eine Gegenüberstellung der Brückenanordnungen 10 der Figuren 2 und 3 zeigen symbolisch, dass die Brückenanordnung 10 nach Figur 2 eine höhere Materialstärke aufweist als die Brückenanordnung 10 nach Figur 3. Dabei weisen beide Brückenanordnungen 10 die gleiche Betriebsfestigkeit auf. Das heißt, sie weisen eine ähnliche Betriebsdrehzahl B und Berstdrehzahl BD auf. Dies liegt daran, dass die Brückenanordnung 10 nach Figur 2 nicht verfestigt wird, anders als die Brückenanordnung 10 nach Figur 3.

Die Materialstärke MS liegt bei der Brückenanordnung 10 nach Figur 2 beispielsweise bei 0,9 mm. Demgegenüber liegt die Materialstärke MS bei der Brückenanordnung 10 nach Figur 3 beispielsweise bei 0,6 mm. Dabei kann die Materialstärke MS bei der Brückenanordnung 10 nach Figur 3 bevorzugt zwischen einschließlich 0,5 mm bis 0,8 mm schwanken. Insbesondere nach Lehre der Erfindung sind nicht nur diese Werte wegen ihrer besonderen Zuverlässigkeit des Rotationskörpers 12 in der Betriebspraxis schutzfähig, sondern auch die Verhältnisse beziehungsweise Dimensionen dieser Beträge zueinander, die sich jeweils durch einfache Rechenregeln ableiten lassen.

Ein Brückenanordnung 10 nach Figur 3, also mit einer Materialstärke MS von 0,6 mm ohne Rotationsverfestigen würde bei Erreichen einer Betriebsdrehzahl B zu einem vorzeitigen Versagen beziehungsweise Bersten des Rotationskörpers 12 führen. Erst das Rotationsverfestigen ermöglicht den Betrieb eines schlanker dimensionierten Rotationskörpers 12 bei vorbekannten Drehzahlen D.

Die verlängerte Lebensdauer des Rotationskörpers 12 nach Figur 3 ist in Figur 4 dargestellt. Figur 4 zeigt ein Diagramm mit einer Horizontalachse, die die Drehzahl D darstellt und zwei Vertikalachsen. Die linke Vertikalachse zeigt die transformierte Spannungsamplitude TS. Die rechte Vertikalachse zeigt die äquivalente plastische Dehnung APD. Figur 4 zeigt zwei Linienverläufe. Der obere Linienverlauf bezieht sich dabei auf die transformierte Spannungsamplitude TS. Der untere Linienverlauf bezieht sich dabei auf die äquivalente plastische Dehnung APD. Beide Linienverläufe umfassen dabei jeweils drei bestimmte Drehzahlen D, wobei diese bei beiden Linienverläufen gleich sind. Die bestimmten Drehzahlen D sind mit Punkten dargestellt.

In Figur 4 kann der linke Punkt beispielsweise die Betriebsdrehzahl B darstellen. Also die Drehzahl des Rotorkörpers 12 in seinem täglichen Praxisbetrieb. Der nächste Punkt kann eine sogenannte Schleuderdrehzahl SD sein. Diese beträgt üblicherweise das 1,2-fache der Betriebsdrehzahl B. Üblicherweise soll der Rotationskörper 12 beziehungsweise dessen rotierende Komponenten derart ausgebildet sein, dass es bei der Schleuderdrehzahl SD zu keiner makroskopischen Änderung kommt. Der dritte Punkt kann beispielsweise die Berstdrehzahl BD sein. Diese beträgt üblicherweise das 1 ,4-fache der Betriebsdrehzahl B. Mindestens bis zur Berstdrehzahl BD soll eine elektrische Maschine üblicherweise den Belastungen standhalten können.

Somit zeigt Figur 4 den Einfluss der Verfestigungsdrehzahl V auf die transformierte Spannungsamplitude TS und die äquivalente plastische Dehnung ÄPD in der kritischen Brückenanordnung 10 eines als Rotorblech ausgebildeten Rotationskörpers 12 mit einer konstanten Materialstärke MS von 0,6 mm. Mit zunehmender plastischer Dehnung steigt die zulässige äquivalente transformiert Spannungsamplitude. Dies bedeutet letztlich eine verlängerte Lebensdauer des Rotorkörpers 12.

Wie zuvor erwähnt, offenbaren die Figuren 5 bis 8 jeweils bevorzugte Maßnahmen eines Verfahrens zum Verfestigen einer Brückenanordnung 10 eines Rotationskörpers 12 mit einer Rotationsachse R für einen elektrischen Antrieb.

Die einzelnen Schritte sind symbolisch in Verfahrensstufen VS dargestellt.

Grundsätzlich umfasst das Verfahren gemäß den Figuren 5 bis 8 mindestens Schritte zum Auswuchten und Rotationsverfestigen,
wobei das Auswuchten mindestens folgende Schritte aufweist:
Rotieren des Rotationskörpers 12 um eine Rotationsachse R mit einer Unwuchtbestimmungsdrehzahl U 110, um eine Unwucht des Rotationskörpers 12 zu detektieren,
Bestimmen der Unwucht des Rotationskörpers 12 120,
Befestigen oder Wegnehmen, bei einer Stillstanddrehzahl S, mindestens eines Auswuchtgewichts am Rotationskörper 12 130, um die Unwucht auszugleichen, wobei das Rotationsverfestigen mindestens folgenden Schritt aufweist:
   Rotieren des Rotationskörpers 12 um die Rotationsachse R mit einer Verfestigungsdrehzahl V 210, wobei der Betrag Verfestigungsdrehzahl V größer ist als der Betrag der Unwuchtbestimmungsdrehzahl U.

Grundsätzlich ist vorgesehen, dass der Rotationskörper 12 ein Rotorblech, ein Rotorblechstapel, ein Rotor oder eine elektrische Maschine ist. In Figur 1 beispielhaft dargestellt ist ein Rotorblech. Dabei ist insbesondere vorgesehen, dass mindestens eine Brückenanordnung 10 am äußeren Umfang mindestens eines Rotorblechs angeordnet ist.

Schematisch angedeutet ist zwischen den Figuren 2 und 3, dass der Betrag der Verfestigungsdrehzahl V derart eingestellt ist, dass mindestens eine Brückenanordnung 10 des Rotationskörpers 12 nach dem Rotationsverfestigen ein Dehnungsmaß von beispielsweise 0,5 Prozent aufweist.

Gemäß einer bevorzugten Ausführungsform der Erfindung ist vorgesehen, dass der Betrag der Verfestigungsdrehzahl V zwischen dem Betrag einer Betriebsdrehzahl B des Rotationskörpers 12 und einem Betrag mindestens einschließlich kleiner 10 Prozent, vorzugsweise mindestens einschließlich kleiner 20 Prozent, einer Berstdrehzahl BD des Rotationskörpers 12 beträgt.

Bevorzugt kann vorgesehen sein ein Erneutes Rotieren des Rotationskörpers 12 um die Rotationsachse R mit der Unwuchtbestimmungsdrehzahl U 140, nach dem Befestigen oder Wegnehmen des mindestens einen Auswuchtgewichts am Rotationskörper 12 130, um ein Vorhandensein einer Unwucht des Rotationskörpers 12 zu detektieren, und vorzugsweise ein bedarfsweises Wiederholen des Auswuchtens.

Eine bevorzugte Reihenfolge der Verfahrensschritte kann nach Figur 5 ausgestaltet sein wie folgt: Eingangs das Rotieren des Rotationskörpers 12 um die Rotationsachse R mit der Verfestigungsdrehzahl V 210, wobei der Betrag Verfestigungsdrehzahl V größer ist als der Betrag der Unwuchtbestimmungsdrehzahl U,
anschließend das Rotieren des Rotationskörpers 12 um seine Rotationsachse R mit der Unwuchtbestimmungsdrehzahl U 110, um die Unwucht des Rotationskörpers 12 zu detektieren,
anschließend das Bestimmen der Unwucht des Rotationskörpers 12 120, anschließend das Befestigen oder Wegnehmen, bei der Stillstanddrehzahl S, mindestens eines Auswuchtgewichts am Rotationskörper 12 130, um die Unwucht auszugleichen,
vorzugsweise anschließend ein erneutes Rotieren des Rotationskörpers 12 um die Rotationsachse R mit der Unwuchtbestimmungsdrehzahl U 140, nach dem Befestigen oder Wegnehmen des mindestens einen Auswuchtgewichts am Rotationskörper 12 130, um ein Vorhandensein einer Unwucht des Rotationskörpers 12 zu detektieren, und vorzugsweise ein bedarfsweises Wiederholen des Auswuchtens.

Eine bevorzugte Reihenfolge der Verfahrensschritte kann nach Figur 6 ausgestaltet sein wie folgt: Eingangs das Rotieren des Rotationskörpers 12 um die Rotationsachse R mit der Verfestigungsdrehzahl V 210, wobei der Betrag Verfestigungsdrehzahl V größer ist als der Betrag der Unwuchtbestimmungsdrehzahl U,
anschließend das Rotieren des Rotationskörpers 12 um seine Rotationsachse R mit der Unwuchtbestimmungsdrehzahl U 110, um die Unwucht des Rotationskörpers 12 zu detektieren,
wobei zwischen dem Rotieren des Rotationskörpers 12 um die Rotationsachse R mit der Verfestigungsdrehzahl V 210 und dem Rotieren des Rotationskörpers 12 um seine Rotationsachse R mit der Unwuchtbestimmungsdrehzahl U 110, der Rotationskörper 12 mit der Stillstanddrehzahl S stillsteht,
anschließend das Bestimmen der Unwucht des Rotationskörpers 12 120, anschließend das Befestigen oder Wegnehmen, bei der Stillstanddrehzahl S, mindestens eines Auswuchtgewichts am Rotationskörper 12 130, um die Unwucht auszugleichen,
vorzugsweise anschließend ein erneutes Rotieren des Rotationskörpers 12 um die Rotationsachse R mit der Unwuchtbestimmungsdrehzahl U 140, nach dem Befestigen oder Wegnehmen des mindestens einen Auswuchtgewichts am Rotationskörper 12 130, um ein Vorhandensein einer Unwucht des Rotationskörpers 12 zu detektieren, und vorzugsweise ein bedarfsweises Wiederholen des Auswuchtens.

Eine alternative bevorzugte Reihenfolge der Verfahrensschritte kann nach Figur 7 ausgestaltet sein wie folgt: Eingangs das Rotieren des Rotationskörpers 12 um seine Rotationsachse R mit der Unwuchtbestimmungsdrehzahl U 110, um die Unwucht des Rotationskörpers 12 zu detektieren,
anschließend das Bestimmen der Unwucht des Rotationskörpers 12 120, anschließend das Befestigen oder Wegnehmen, bei der Stillstanddrehzahl S, mindestens eines Auswuchtgewichts am Rotationskörper 12 130, um die Unwucht auszugleichen,
anschließend das Rotieren des Rotationskörpers 12 um die Rotationsachse R mit der Verfestigungsdrehzahl V 210, wobei der Betrag Verfestigungsdrehzahl V größer ist als der Betrag der Unwuchtbestimmungsdrehzahl U,
vorzugsweise anschließend ein erneutes Rotieren des Rotationskörpers 12 um die Rotationsachse R mit der Unwuchtbestimmungsdrehzahl U 140, nach dem Befestigen oder Wegnehmen des mindestens einen Auswuchtgewichts am Rotationskörper 12 130, um ein Vorhandensein einer Unwucht des Rotationskörpers 12 zu detektieren, und vorzugsweise ein bedarfsweises Wiederholen des Auswuchtens.

Eine bevorzugte Reihenfolge der Verfahrensschritte kann nach Figur 8 ausgestaltet sein wie folgt: Eingangs das Rotieren des Rotationskörpers 12 um seine Rotationsachse R mit der Unwuchtbestimmungsdrehzahl U 110, um die Unwucht des Rotationskörpers 12 zu detektieren,
anschließend das Bestimmen der Unwucht des Rotationskörpers 12 120, anschließend das Befestigen oder Wegnehmen, bei der Stillstanddrehzahl S, mindestens eines Auswuchtgewichts am Rotationskörper 12 130, um die Unwucht auszugleichen,
vorzugsweise anschließend ein erneutes Rotieren des Rotationskörpers 12 um die Rotationsachse R mit der Unwuchtbestimmungsdrehzahl U 140, nach dem Befestigen oder Wegnehmen des mindestens einen Auswuchtgewichts am Rotationskörper 12 130, um ein Vorhandensein einer Unwucht des Rotationskörpers 12 zu detektieren, und vorzugsweise ein bedarfsweises Wiederholen des Auswuchtens,
anschließend das Rotieren des Rotationskörpers 12 um die Rotationsachse R mit der Verfestigungsdrehzahl V 210, vorzugsweise im Rahmen der abschließenden Montage des Rotationskörpers 12, wobei der Betrag Verfestigungsdrehzahl V größer ist als der Betrag der Unwuchtbestimmungsdrehzahl U.

Die Verfestigungsdrehzahl V beträgt beispielsweise zwischen einschließlich 16000 und einschließlich 22000 Umdrehungen pro Minuten. Bevorzugt beträgt die Verfestigungsdrehzahl V 20000 Umdrehungen pro Minute. Dabei kann jeweils eine Abweichung von bis zu 10 Prozent vorgesehen sein.

Beispielsweise kann die Berstdrehzahl BD, unabhängig oder auch abhängig von den vorgenannten Werten, zwischen einschließlich 23000 und einschließlich 27000 Umdrehungen pro Minuten betragen. Bevorzugt beträgt die Berstdrehzahl BD, unabhängig oder auch abhängig von den vorgenannten Zahlen, 25000 Umdrehungen pro Minute. Dabei kann jeweils eine Abweichung von bis zu 10 Prozent vorgesehen sein.

Beispielsweise kann die Betriebsdrehzahl B, unabhängig oder auch abhängig von den vorgenannten Werten, zwischen einschließlich 400 und einschließlich 1000 Umdrehungen pro Minuten betragen. Bevorzugt beträgt die Betriebsdrehzahl B, unabhängig oder auch abhängig von den vorgenannten Zahlen, 500 Umdrehungen pro Minute. Dabei kann jeweils eine Abweichung von bis zu 10 Prozent vorgesehen sein.

Beispielsweise, jedoch nicht limitierend, kann die Unwuchtbestimmungsdrehzahl U der Betriebsdrehzahl B entsprechen, insbesondere mit einer Abweichung von einschließlich 10 Prozent.

Ein nach Lehre der Erfindung eingestellter Rotationskörper 12 kann durch das Rotationsverfestigen mit seiner radial zur Rotationsachse R geringen Materialstärke MS der Brückenanordnung 10 in einer regelmäßigen Betriebspraxis 300 ohne vorzeitiges Materialversagen mit einer Betriebsdrehzahl B betrieben werden.

Regelmäßige Betriebspraxis 300 bedeutet hierbei die tägliche Anwendung des Rotationskörpers 12 gemäß seinem tatsächlichen Verwendungszweck. Dies erfolgt gemäß den Figuren 5 bis 8 nach dem jeweilig bevorzugten Verfahren

### Bezugszeichenliste

- 10: Brückenanordnung eines Rotationskörpers
- 12: Rotationskörper

- 110: Rotieren eines Rotationskörpers um seine Rotationsachse mit einer Unwuchtbestimmungsdrehzahl
- 120: Bestimmen einer Unwucht eines Rotationskörpers
- 130: Befestigen oder Wegnehmen, bei einer Stillstanddrehzahl, mindestens eines Auswuchtgewichts an einem Rotationskörper
- 140: Erneutes Rotieren des Rotationskörpers um die Rotationsachse mit einer Unwuchtbestimmungsdrehzahl

- 210: Rotieren eines Rotationskörpers um seine Rotationsachse mit einer Verfestigungsdrehzahl
- 300: Regelmäßige Betriebspraxis

- R: Rotationsachse
- U: Unwuchtbestimmungsdrehzahl
- S: Stillstanddrehzahl
- V: Verfestigungsdrehzahl
- B: Betriebsdrehzahl
- BD: Berstdrehzahl
- A: Ausschnitt einer Brückenanordnung eines als Rotorblech ausgebildeten Rotationskörpers
- MS: Materialstärke
- D: Drehzahl
- ÄPD: Äquivalente plastische Dehnung
- TS: Transformierte Spannungsamplitude
- SD: Schleuderdrehzahl
- VS: Verfahrensstufen

## Patentansprüche

1. Verfahren zum Verfestigen einer Brückenanordnung (10) eines Rotationskörpers (12) mit einer Rotationsachse (R) für einen elektrischen Antrieb, mindestens aufweisend Schritte zum Auswuchten und Rotationsverfestigen,
wobei das Auswuchten mindestens folgende Schritte aufweist:
- Rotieren des Rotationskörpers (12) um eine Rotationsachse (R) mit einer Unwuchtbestimmungsdrehzahl (U) (110), um eine Unwucht des Rotationskörpers (12) zu detektieren,
- Bestimmen der Unwucht des Rotationskörpers (12) (120),
- Befestigen oder Wegnehmen, bei einer Stillstanddrehzahl (S), mindestens eines Auswuchtgewichts am Rotationskörper (12) (130), um die Unwucht auszugleichen,
wobei das Rotationsverfestigen mindestens folgenden Schritt aufweist:
- Rotieren des Rotationskörpers (12) um die Rotationsachse (R) mit einer Verfestigungsdrehzahl (V) (210), wobei der Betrag Verfestigungsdrehzahl (V) größer ist als der Betrag der Unwuchtbestimmungsdrehzahl (U), wobei der Rotationskörper (12) ein Rotorblech, ein Rotorblechstapel, ein Rotor oder eine elektrische Maschine ist und mindestens eine Brückenanordnung (10) am äußeren Umfang mindestens eines Rotorblechs angeordnet ist,
wobei der Betrag der Verfestigungsdrehzahl (V) derart eingestellt ist, dass mindestens eine Brückenanordnung (10) des Rotationskörpers (12) nach dem Rotationsverfestigen ein Dehnungsmaß von mindestens einschließlich 0,2 Prozent bis einschließlich 1 Prozent, vorzugsweise 0,5 Prozent aufweist.

2. Verfahren nach Anspruch 1, wobei
der Betrag der Verfestigungsdrehzahl (V) zwischen dem Betrag einer Betriebsdrehzahl (B) des Rotationskörpers (12) und einem Betrag mindestens einschließlich kleiner 10 Prozent, vorzugsweise mindestens einschließlich kleiner 20 Prozent, einer Berstdrehzahl (BD) des Rotationskörpers (12) beträgt.

3. Verfahren nach mindestens einem der vorgenannten Ansprüche, wobei ein
- erneutes Rotieren des Rotationskörpers (12) um die Rotationsachse (R) mit der Unwuchtbestimmungsdrehzahl (U) (140), nach dem Befestigen oder Wegnehmen des mindestens einen Auswuchtgewichts am Rotationskörper (12) (130), um ein Vorhandensein einer Unwucht des Rotationskörpers (12) zu detektieren, und vorzugsweise ein bedarfsweises Wiederholen des Auswuchtens.

4. Verfahren nach mindestens einem der vorgenannten Ansprüche, **gekennzeichnet durch** folgende Reihenfolge der Schritte:
- Eingangs das Rotieren des Rotationskörpers (12) um die Rotationsachse (R) mit der Verfestigungsdrehzahl (V) (210), wobei der Betrag Verfestigungsdrehzahl (V) größer ist als der Betrag der Unwuchtbestimmungsdrehzahl (U),
- anschließend das Rotieren des Rotationskörpers (12) um seine Rotationsachse (R) mit der Unwuchtbestimmungsdrehzahl (U) (110), um die Unwucht des Rotationskörpers (12) zu detektieren, wobei optional zwischen dem Rotieren des Rotationskörpers (12) um die Rotationsachse (R) mit der Verfestigungsdrehzahl (V) (210) und dem Rotieren des Rotationskörpers (12) um seine Rotationsachse (R) mit der Unwuchtbestimmungsdrehzahl (U) (110), der Rotationskörper (12) mit der Stillstanddrehzahl (S) stillsteht,
- anschließend das Bestimmen der Unwucht des Rotationskörpers (12) (120),
- anschließend das Befestigen oder Wegnehmen, bei der Stillstanddrehzahl (S), mindestens eines Auswuchtgewichts am Rotationskörper (12) (130), um die Unwucht auszugleichen,
- vorzugsweise anschließend ein erneutes Rotieren des Rotationskörpers (12) um die Rotationsachse (R) mit der Unwuchtbestimmungsdrehzahl (U) (140), nach dem Befestigen oder Wegnehmen des mindestens einen Auswuchtgewichts am Rotationskörper (12) (130), um ein Vorhandensein einer Unwucht des Rotationskörpers (12) zu detektieren, und vorzugsweise ein bedarfsweises Wiederholen des Auswuchtens.

5. Verfahren nach mindestens einem der vorgenannten Ansprüche, **gekennzeichnet durch** folgende Reihenfolge der Schritte:
- Eingangs das Rotieren des Rotationskörpers (12) um seine Rotationsachse (R) mit der Unwuchtbestimmungsdrehzahl (U) (110), um die Unwucht des Rotationskörpers (12) zu detektieren,
- anschließend das Bestimmen der Unwucht des Rotationskörpers (12) (120),
- anschließend das Befestigen oder Wegnehmen, bei der Stillstanddrehzahl (S), mindestens eines Auswuchtgewichts am Rotationskörper (12) (130), um die Unwucht auszugleichen,
- anschließend das Rotieren des Rotationskörpers (12) um die Rotationsachse (R) mit der Verfestigungsdrehzahl (V) (210), wobei der Betrag Verfestigungsdrehzahl (V) größer ist als der Betrag der Unwuchtbestimmungsdrehzahl (U),
- vorzugsweise anschließend ein erneutes Rotieren des Rotationskörpers (12) um die Rotationsachse (R) mit der Unwuchtbestimmungsdrehzahl (U) (140), nach dem Befestigen oder Wegnehmen des mindestens einen Auswuchtgewichts am Rotationskörper (12) (130), um ein Vorhandensein einer Unwucht des Rotationskörpers (12) zu detektieren, und vorzugsweise ein bedarfsweises Wiederholen des Auswuchtens.

6. Verfahren nach mindestens einem der vorgenannten Ansprüche, **gekennzeichnet durch** folgende Reihenfolge der Schritte:
- Eingangs das Rotieren des Rotationskörpers (12) um seine Rotationsachse (R) mit der Unwuchtbestimmungsdrehzahl (U) (110), um die Unwucht des Rotationskörpers (12) zu detektieren,
- anschließend das Bestimmen der Unwucht des Rotationskörpers (12) (120),
- anschließend das Befestigen oder Wegnehmen, bei der Stillstanddrehzahl (S), mindestens eines Auswuchtgewichts am Rotationskörper (12) (130), um die Unwucht auszugleichen,
- vorzugsweise anschließend ein erneutes Rotieren des Rotationskörpers (12) um die Rotationsachse (R) mit der Unwuchtbestimmungsdrehzahl (U) (140), nach dem Befestigen oder Wegnehmen des mindestens einen Auswuchtgewichts am Rotationskörper (12) (130), um ein Vorhandensein einer Unwucht des Rotationskörpers (12) zu detektieren, und vorzugsweise ein bedarfsweises Wiederholen des Auswuchtens,
- anschließend das Rotieren des Rotationskörpers (12) um die Rotationsachse (R) mit der Verfestigungsdrehzahl (V) (210), vorzugsweise im Rahmen der abschließenden Montage des Rotationskörpers (12), wobei der Betrag Verfestigungsdrehzahl (V) größer ist als der Betrag der Unwuchtbestimmungsdrehzahl (U).

7. Rotationskörper (12), hergestellt durch die Schritte des Verfahrens nach mindestens einem der vorgenannten Ansprüche, **gekennzeichnet durch** die Merkmale des Rotationskörpers (12) nach mindestens einem der vorgenannten Ansprüche.

## Claims

1. A method for consolidating a bridge structure (10) of a rotating body (12) having an axis of rotation (R) for an electric drive, at least having steps for balancing and rotation consolidation,
wherein the balancing has at least the following steps:
- rotating the rotating body (12) about an axis of rotation (R) at an imbalance determination speed (U) (110) in order to detect an imbalance of the rotating body (12),
- determining the imbalance of the rotating body (12) (120),
- attaching or removing, at a standstill speed (S), at least one balancing weight to or from the rotating body (12) (130) in order to compensate for the imbalance,
wherein the rotation consolidation has at least the following step:
- rotating the rotating body (12) about the axis of rotation (R) at a consolidation speed (V) (210), wherein the consolidation speed (V) is greater than the imbalance determination speed (U), wherein the rotating body (12) is a rotor lamination, a rotor lamination stack, a rotor or an electrical machine and wherein at least one bridge structure (10) is arranged on the outer circumference of at least one rotor lamination,
wherein the magnitude of the consolidation speed (V) is set such that, after the rotation consolidation, at least one bridge structure (10) of the rotating body (12) has a degree of elongation of at least 0.2 percent inclusive to 1 percent inclusive, preferably 0.5 percent.

2. The method according to claim 1, wherein
the magnitude of the consolidation speed (V) amounts to between the magnitude of an operating speed (B) of the rotating body (12) and a magnitude of at least less than 10 percent inclusive, preferably at least less than 20 percent inclusive, of a burst speed (BD) of the rotating body (12).

3. The method according to at least one of the preceding claims, wherein a
- new rotation of the rotating body (12) about the axis of rotation (R) at the imbalance determination speed (U) (140), after attaching or removing the at least one balancing weight to the rotating body (12) (130), in order to detect the presence of an imbalance of the rotating body (12), and preferably repeating the balancing as required.

4. The method according to at least one of the preceding claims, **characterized by** the following sequence of steps:
- initially rotating the rotating body (12) about the axis of rotation (R) at the consolidation speed (V) (210), wherein the magnitude of the consolidation speed (V) is greater than the magnitude of the imbalance determination speed (U),
- subsequently rotating the rotating body (12) about its axis of rotation (R) at the imbalance determination speed (U) (110) in order to detect the imbalance of the rotating body (12), wherein optionally the rotating body (12) is stationary at the standstill speed (S) between the rotation of the rotating body (12) about the axis of rotation (R) at the consolidation speed (V) (210) and the rotation of the rotating body (12) about its axis of rotation (R) at the imbalance determination speed (U) (110),
- subsequently determining the imbalance of the rotating body (12) (120),
- subsequently attaching or removing, at the standstill speed (S), at least one balancing weight to or from the rotating body (12) (130) in order to compensate for the imbalance,
- preferably subsequently performing a new rotation of the rotating body (12) about the axis of rotation (R) at the imbalance determination speed (U) (140), after attaching or removing the at least one balancing weight to the rotating body (12) (130), in order to detect the presence of an imbalance of the rotating body (12), and preferably repeating the balancing as required.

5. The method according to at least one of the preceding claims, **characterized by** the following sequence of steps:
- initially rotating the rotating body (12) about its axis of rotation (R) at the imbalance determination speed (U) (110) in order to detect the imbalance of the rotating body (12),
- subsequently determining the imbalance of the rotating body (12) (120),
- subsequently attaching or removing, at the standstill speed (S), at least one balancing weight to or from the rotating body (12) (130) in order to compensate for the imbalance,
- subsequently rotating the rotating body (12) about the axis of rotation (R) at the consolidation speed (V) (210), wherein the magnitude of the consolidation speed (V) is greater than the magnitude of the imbalance determination speed (U),
- preferably subsequently performing a new rotation of the rotating body (12) about the axis of rotation (R) at the imbalance determination speed (U) (140), after attaching or removing the at least one balancing weight to the rotating body (12) (130), in order to detect the presence of an imbalance of the rotating body (12), and preferably repeating the balancing as required.

6. The method according to at least one of the preceding claims, **characterized by** the following sequence of steps:
- initially rotating the rotating body (12) about its axis of rotation (R) at the imbalance determination speed (U) (110) in order to detect the imbalance of the rotating body (12),
- subsequently determining the imbalance of the rotating body (12) (120),
- subsequently attaching or removing, at the standstill speed (S), at least one balancing weight to or from the rotating body (12) (130) in order to compensate for the imbalance,
- preferably subsequently performing a new rotation of the rotating body (12) about the axis of rotation (R) at the imbalance determination speed (U) (140), after attaching or removing the at least one balancing weight to the rotating body (12) (130), in order to detect the presence of an imbalance of the rotating body (12), and preferably repeating the balancing as required,
- subsequently rotating the rotating body (12) about the axis of rotation (R) at the consolidation speed (V) (210), preferably during the final assembly of the rotating body (12), wherein the magnitude of the consolidation speed (V) is greater than the magnitude of the imbalance determination speed (U).

7. A rotating body (12) produced by the steps of the method according to at least one of the preceding claims, **characterized by** the features of the rotating body (12) according to at least one of the preceding claims.

## Revendications

1. Méthode de consolidation d'une structure de pont (10) d'un corps rotatif (12) comportant un axe de rotation (R) pour un entraînement électrique, présentant au moins les étapes d'équilibrage et de consolidation en rotation,
dans laquelle l'équilibrage présente au moins les étapes suivantes :
- rotation du corps rotatif (12) autour d'un axe de rotation (R) à une vitesse de détermination de balourd (U) (110) afin de détecter un balourd du corps rotatif (12),
- détermination du balourd du corps rotatif (12) (120),
- fixation ou retrait, à une vitesse d'arrêt (S), d'au moins une masse d'équilibrage sur le corps rotatif (12) (130) afin de compenser le balourd,
dans laquelle la consolidation en rotation présente au moins l'étape suivante :
- rotation du corps rotatif (12) autour de l'axe de rotation (R) à une vitesse de consolidation (V) (210), dans laquelle la valeur de la vitesse de consolidation (V) est supérieure à la valeur de la vitesse de détermination de balourd (U), dans laquelle le corps rotatif (12) est une tôle de rotor, un empilement de tôles de rotor, un rotor ou une machine électrique et au moins une structure de pont (10) est disposée sur la circonférence extérieure d'au moins une tôle de rotor,
dans laquelle la valeur de la vitesse de consolidation (V) est réglée de façon qu'au moins une structure de pont (10) du corps rotatif (12) après consolidation en rotation présente une mesure d'allongement d'au moins 0,2 % inclus jusqu'à 1 % inclus, de préférence 0,5 %.

2. Méthode selon la revendication 1, dans laquelle
la valeur de la vitesse de consolidation (V) est comprise entre la valeur d'une vitesse de fonctionnement (B) du corps rotatif (12) et une valeur au moins inférieure à 10 % inclus, de préférence au moins inférieure à 20 % inclus, d'une vitesse de rupture (BD) du corps rotatif (12).

3. Méthode selon au moins l'une quelconque des revendications précédentes, dans laquelle une
- nouvelle rotation du corps rotatif (12) autour de l'axe de rotation (R) à la vitesse de détermination de balourd (U) (140), après avoir fixé ou retiré l'au moins un poids d'équilibrage sur le corps rotatif (12) (130), pour détecter une présence d'un balourd du corps rotatif (12), et de préférence répéter l'équilibrage si nécessaire.

4. Méthode selon au moins l'une quelconque des revendications précédentes, **caractérisée par** la séquence d'étapes suivante :
- initialement, la rotation du corps rotatif (12) autour de l'axe de rotation (R) à la vitesse de consolidation (V) (210), dans laquelle la valeur de la vitesse de consolidation (V) est supérieure à la valeur de la vitesse de détermination de balourd (U),
- puis la rotation du corps rotatif (12) autour de son axe de rotation (R) à la vitesse de détermination de balourd (U) (110) afin de détecter le balourd du corps rotatif (12), dans laquelle éventuellement entre la rotation du corps rotatif (12) autour de l'axe de rotation (R) à la vitesse de consolidation (V) (210) et la rotation du corps rotatif (12) autour de son axe de rotation (R) à la vitesse de détermination de balourd (U) (110), le corps rotatif (12) reste immobile à la vitesse d'arrêt (S),
- puis la détermination du balourd du corps rotatif (12) (120),
- puis la fixation ou le retrait, à la vitesse d'arrêt (S), d'au moins une masse d'équilibrage sur le corps rotatif (12) (130) pour compenser le balourd,
- puis, de préférence, une nouvelle rotation du corps rotatif (12) autour de l'axe de rotation (R) à la vitesse de détermination de balourd (U) (140), après avoir fixé ou retiré l'au moins un poids d'équilibrage sur le corps rotatif (12) (130), afin de détecter une présence d'un balourd du corps rotatif (12), et de préférence une répétition de l'équilibrage si nécessaire.

5. Méthode selon au moins l'une quelconque des revendications précédentes, **caractérisée par** la séquence d'étapes suivante :
- initialement, la rotation du corps rotatif (12) autour de son axe de rotation (R) à la vitesse de détermination de balourd (U) (110) afin de détecter le balourd du corps rotatif (12),
- puis la détermination du balourd du corps rotatif (12) (120),
- puis la fixation ou le retrait, à la vitesse d'arrêt (S), d'au moins une masse d'équilibrage sur le corps rotatif (12) (130) pour compenser le balourd,
- puis la rotation du corps rotatif (12) autour de l'axe de rotation (R) à la vitesse de consolidation (V) (210), dans laquelle la valeur de la vitesse de consolidation (V) est supérieure à la valeur de la vitesse de détermination de balourd (U),
- puis, de préférence, une nouvelle rotation du corps rotatif (12) autour de l'axe de rotation (R) à la vitesse de détermination de balourd (U) (140), après avoir fixé ou retiré l'au moins un poids d'équilibrage sur le corps rotatif (12) (130), afin de détecter une présence d'un balourd du corps rotatif (12), et de préférence une répétition de l'équilibrage si nécessaire.

6. Méthode selon au moins l'une quelconque des revendications précédentes, **caractérisée par** la séquence d'étapes suivante :
- initialement, la rotation du corps rotatif (12) autour de son axe de rotation (R) à la vitesse de détermination de balourd (U) (110) afin de détecter le balourd du corps rotatif (12),
- puis la détermination du balourd du corps rotatif (12) (120),
- puis la fixation ou le retrait, à la vitesse d'arrêt (S), d'au moins une masse d'équilibrage sur le corps rotatif (12) (130) pour compenser le balourd,
- puis, de préférence, une nouvelle rotation du corps rotatif (12) autour de l'axe de rotation (R) à la vitesse de détermination de balourd (U) (140), après avoir fixé ou retiré l'au moins un poids d'équilibrage sur le corps rotatif (12) (130), afin de détecter une présence d'un balourd du corps rotatif (12), et de préférence une répétition de l'équilibrage si nécessaire,
- puis la rotation du corps rotatif (12) autour de l'axe de rotation (R) à la vitesse de consolidation (V) (210), de préférence dans le cadre de l'assemblage final du corps rotatif (12), dans laquelle la valeur de la vitesse de consolidation (V) est supérieure à la valeur de la vitesse de détermination de balourd (U).

7. Corps rotatif (12), fabriqué par les étapes de la méthode selon au moins l'une quelconque des revendications précédentes, **caractérisé par** les caractéristiques du corps rotatif (12) selon au moins l'une quelconque des revendications précédentes.
